# EUROPÄISCHE PATENTSCHRIFT

(11) **EP 4 365 339 B1**
(45) Veröffentlichungstag und Bekanntmachung des Hinweises auf die Patenterteilung: **30.09.2026**
(21) Anmeldenummer: 22205124.5
(22) Anmeldetag: 02.11.2022
(51) Int. Cl.: D01D 5/08, D01D 1/09, D01D 4/02, D01D 4/06, B29C 48/05, B29C 48/86, B29C 48/92, B29C 48/345, D01D 5/084

(54) **SPINNBALKEN ZUR HERSTELLUNG VON SCHMELZGESPONNENEN FILAMENTEN ODER GARNEN**
SPINNING BEAM FOR PRODUCING MELT-SPUN FILAMENTS OR YARNS
BARRE DE FILAGE POUR LA FABRICATION DE FILAMENTS OU DE FILS FILÉS AU FONDU

(43) Veröffentlichungstag der Anmeldung: 08.05.2024
(73) Patentinhaber: Oerlikon Textile GmbH & Co. KG, 42897 Remscheid (DE)
(72) Erfinder: Lüttinger, Michael, 8406 Winterthur (CH); Bozzini, Stefan, 8200 Schaffhausen (CH); Krause, Maximilian, 79807 Lottstetten (DE); Rapold, Michael, 8460 Marthalen (CH); Hafner, Sabine, 8212 Neuhausen (CH)
(74) Vertreter: Keenway Patentanwälte Neumann Heine Taruttis

(56) Entgegenhaltungen:
- EP-A1- 1 431 427
- DE-U1- 212004 000 010
- US-A1- 2010 015 266

## Beschreibung

Die Erfindung betrifft einen Spinnbalken zur Herstellung von schmelzgesponnenen Filamenten oder Garnen nach dem Oberbegriff von Anspruch 1.

Die bekannten Spinnbalken weisen Spinndüsenpakete auf, die reihenförmig an der Unterseite des Spinnbalkens angeordnet sind. Je nach Größe der Anlage werden mehrere Spinnbalkenmodule fest nebeneinander angeordnet, die über Rohrleitungen für das Wärmeträgermedium fest miteinander verbunden sind. Üblicherweise wird als Heizmedium Öl oder Dyphyl verwendet, die in flüssiger oder gasförmiger Phase im Heizkreislauf vorliegen. Der anlagentechnische Aufwand für diese Heizmedien ist sehr hoch und benötigt Platz, da eine Vakuumstation, Heizsystem, Hochtemperaturboiler und Druckbehälter benötigt werden, die bei einer Vergrößerung des Spinnbalkens ausgetauscht oder modular erweitert werden müssen. Der Umgang mit diesen Medien ist überdies aus Gründen der Sicherheit kritisch und bei Defekten nicht umweltschonend.

Ein Beispiel für einen modular aufgebauten Spinnbalken ist in der EP 3242966 A1 beschrieben. Ein weiterer Nachteil ist zudem ein meist einheitliches Temperaturniveau, was für den flüssigen Kunststoff vorteilhaft ist, für einzelne Komponenten des Spinnbalkens aber unnötig Energie verbraucht, da eine variable Anpassung des Temperaturniveaus an einzelne Komponenten nur mit erhöhtem Aufwand möglich ist. Zur Regeneration von einzelnen Komponenten nach dem Einfrieren von Kunststoff sind elektrische Zusatzheizungen bekannt, die unter anderem ein Heißluftgebläse verwenden, was anlagentechnisch und energetisch nachteilig ist.

Die DE 21 2004 000 010 U1 offenbart auf der Ober- und Unterseite die Anordnung von elektrischen Heizleitern sowie die Verwendung von lokal angeordneten Heizpatronen. Die Außenseiten der mit Schmelzeleitungen versehenen Zwischenplatte wird nicht beheizt.

Die DE 10258170 B3 offenbart einen Spinnbalken, dessen Längsseiten teilweise und die Oberseite vollständig mit elektrischen Heizplatten verkleidet ist. Die Spinnpumpen mit den Verteilleitungen sind in der klassischen Ausführung separat seitlich angeordnet und mittels Faltenbalgleitung angeflanscht.

Die US 3,864,068 offenbart eine Spinnvorrichtung, bei der die Lochplatten hintereinander aufgeschichtet sind und durch einen Extruder mit flüssigem Kunststoff gespeist werden. Die Vorrichtung mit den Lochplatten weist eine einzige Heizplatte auf, in der in Kanälen oder Bohrungen Heizspulen angeordnet sind. Die Heizplatte ist zwischen dem Extruder und den Lochplatten angeordnet. Die Außenseiten der Lochplatten liegen frei.

Die US 2011/001097 A1 offenbart eine Spritzgießvorrichtung zur Herstellung von Formteilen, bei der ein Verteiler für den flüssigen Kunststoff oberhalb der Düsenvorrichtung mit den Kernelementen angeordnet ist. Der Verteiler weist mehrere Heizplatten auf.

Entsprechend liegt der Erfindung die Aufgabe zugrunde, einen kostengünstigen Spinnbalken dahingehend weiterzubilden, dass dieser sehr kompakt ist, modular erweiterbar und das Temperaturniveau einzelner Komponenten variabel angepasst werden kann.

Die Erfindung löst die gestellte Aufgabe durch einen Spinnbalken mit den in Anspruch 1 angegebenen Merkmalen. Vorteilhafte Weiterbildungen der Erfindung sind in den abhängigen - Ansprüchen definiert.

Die Erfindung betrifft einen Spinnbalken zur Herstellung von schmelzgesponnenem Garn, umfassend zumindest einen Düsenrachen, in dem mindestens ein Spinnpaket angeordnet ist, sowie mindestens einen Verteilblock mit mindestens einer Spinnpumpe. Über einen extern angeordneten Extruder wird flüssiger Kunststoff (Kunststoff- oder Polymerschmelze) zu der mindestens einen Spinnpumpe gefördert, die den flüssigen Kunststoff über den mindestens einen Verteilblock zu dem mindestens einen Spinnpaket mit mindestens einer Spinndüse fördert. Das oder die Spinnpakete sind in mindestens einem Düsenrachen angeordnet.

Die Erfindung schließt die technische Lehre ein, dass der zumindest eine Düsenrachen und/oder der zumindest eine Verteilblock an zumindest einem Teil der Außenflächen mindestens ein Flächenheizelement aufweist, das ausgebildet ist, zumindest diesen Teil der Außenfläche elektrisch zu beheizen. Dabei ist der mindestens eine Verteilblock als ein flächiges Element ausgebildet, der aus einer unteren und mindestens einer oberen Platte besteht und mit einer längsseitigen Stirnwand an dem Düsenrachen angeordnet ist, und dass der Verteilblock zumindest auf der Ober- und Unterseite mit Flächenheizelementen verkleidet ist.

Durch das Heizen mittels elektrischer Heizpatronen und das Einkapseln des Düsenrachens und des Verteilblocks mittels elektrischer Flächenheizelemente sowie das Ummanteln der Schmelzeleitung mittels der elektrischen Heizmanschette entfällt das komplette bisherige Heizmedium und vereinfacht die Konstruktion und Herstellung erheblich. Boiler, doppelwandige Rohre und aufwendige Schweiß- und Prüfverfahren können entfallen. Zudem können ganze Baugruppen des bisherigen Heizsystems und die Vakuumstation entfallen. Die Konstruktion wird kompakter als die bisherige Lösung und eignet sich leichter für eine modulare Erweiterung. Der Transport und die Installation vereinfachen sich. Trotz der höheren Heizkosten aufgrund der elektrischen Energie im Vergleich zu fossilen Energieträgern ergeben sich deutliche Vorteile, da auch der Betrieb der Anlage sicherer wird und die Investitionskosten sinken. Zudem lässt sich das Temperaturniveau spezifischer regulieren, indem einzelne Flächenheizelemente ansteuerbar sind. Weiterhin kann das Gesamttemperaturniveau über die eingespeiste Leistung dem verwendeten Kunststoff und/oder dem herzustellenden Produkt einfach angepasst werden.

Eine längsseitige Stirnwand des Verteilblocks ist an einer Längsseite des Düsenrachens angeordnet, wobei sowohl der Verteilblock und der Düsenrachen über gemeinsame Leitungen zur Zuführung der Kunststoffschmelze in die Spinnpakete verbunden sind. Durch diese konstruktive Anordnung von Verteilblock an den Düsenrachen verkürzen sich die Zuleitungen für den flüssigen Kunststoff, wodurch das Einfrieren der Leitungen verhindert wird, gleichzeitig eine konstante Beheizung mit geringem Aufwand möglich ist.

In vorteilhafter Weiterbildung der Erfindung kann die elektrische Beheizung zusätzlich mittels -Heizpatronen erfolgen. Die Heizpatronen können variabel im Spinnbalken angeordnet werden und einzeln angesteuert werden. Somit kann das Temperaturniveau einzelner Flächenheizelemente und damit auch die einzelnen Komponenten des Spinnbalkens separat hinsichtlich Temperaturniveau und Geschwindigkeit des erzielbaren Temperaturniveaus geregelt werden.

Dabei sind zumindest die vertikalen Außenflächen des Düsenrachens mit Flächenheizelementen verkleidet, da diese die meiste Wärme abstrahlen und die Kunststoffschmelze durch die Spinnpakete vertikal in die Spinndüsen geleitet werden. Die Oberseite des Düsenrachens mit den Spinnpaketen kann konventionell zur Umgebung hin isoliert werden. Die Flächenheizelemente können mittels Befestigungselementen an den Außenflächen aufgehängt und klemmend befestigt werden, so dass eine Demontage zur Wartung des Spinnbalkens schnell möglich ist.

Dadurch, dass der Verteilblock zumindest auf der Ober- und Unterseite mit Flächenheizelementen verkleidet ist, kann dieser als Wärmespeicher dienen, so dass die Zufuhrleitungen vom Verteilblock in die Spinnpakete nicht zufrieren.

Vorzugsweise weist der Düsenrachen zwischen jeweils zwei Spinnpaketen Trennwände auf, die ausgebildet sind, Heizpatronen aufzunehmen. Die Spinnpakete können damit an allen vertikalen Flächen gleichmäßig beheizt werden

Dadurch, dass die Flächenheizelemente demontierbar am Düsenrachen und/oder am Verteilblock befestigt sind, ist der Spinnbalken sehr schnell für Wartungsarbeiten zugänglich. Ein sicherheitsgefährdender Umgang mit den Energie-/Wärmeträgern (Öl, Dyphyl) nach dem Stand der Technik wird damit vermieden.

Dadurch, dass der Verteilblock mehrteilig ausgebildet ist, können in einzelne Elemente des Verteilblockes die Zuführ- und Verteilleitungen eingearbeitet werden. Dies kann beispielsweise durch spanende oder erodierende Fertigungsverfahren erfolgen. Dabei können in zumindest einem Teil des Verteilblockes offene Zuführ- und/oder Verteilleitungen angeordnet sein, die durch einen zweiten Teil des Verteilblockes verschlossen werden. Der Verteilblock ist vorzugsweise flächig ausgebildet und wird mit einer langen Stirnkante an den Düsenrachen angeschlossen. Dadurch sind die Zuführ- und Verteilleitungen horizontal ausgerichtet. Es vereinfacht die Installation von passenden Flächenheizelementen.

Die flächige Oberseite des Verteilblockes wird genutzt, um eine Spinnpumpe auf oder teilweise in den Verteilblock anzuordnen. Damit werden die Leitungen, die den flüssigen Kunststoff transportieren, verkürzt.

Eine zusätzliche Verkürzung der Leitungen wird dadurch erreicht, dass der Verteilblock ausgebildet ist, den flüssigen Kunststoff vom externen Extruder zur Spinnpumpe zu leiten.

Mittels Befestigungselementen werden die Komponenten des Verteilblockes miteinander befestigt und dichtend verspannt, so dass die Zuführ- und Verteilleitungen zur Umgebung abgedichtet werden. Die Integration der Zuführ- und Verteilleitungen in den Verteilblock reduziert die Montagearbeit bei der Verlegung von einzelnen Rohrleitungen, die nach dem Stand der Technik alle einzeln isoliert und beheizt werden müssen. Die Verwendung von Flächenheizelementen vereinfacht den Aufbau des Verteilblockes.

Die Kombination der Spinnpumpe mit dem Verteilblock ermöglicht mehrere Varianten der Zuführung des flüssigen Kunststoffes, wonach der flüssige Kunststoff im Verteilblock ohne Verzweigung oder mit mehreren Verzweigungen zu jedem Spinnpaket geleitet wird. Damit kann die Heizleistung reduziert werden und anhand der Verzweigungen angepasst werden.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Figur 1:: eine Detaildarstellung eines Spinnbalkens;
- Figur 2:: eine Schnittdarstellung durch einen Düsenrachen mit Verteilblock;
- Figur 3:: einen Teilschnitt durch den oberen Teil des Verteilblockes;
- Figur 4:: eine Schnittdarstellung des Spinnbalkens mit dem halb geschnittenen Oberteil des Verteilblocks;
- Figur 5:: eine schematische Darstellung des Leitungssystems in einem Verteilblock;
- Figur 6:: eine weitere schematische Darstellung des Leitungssystems in einem Verteilblock;
- Figur 7:: eine weitere schematische Darstellung des Leitungssystems in einem Verteilblock.

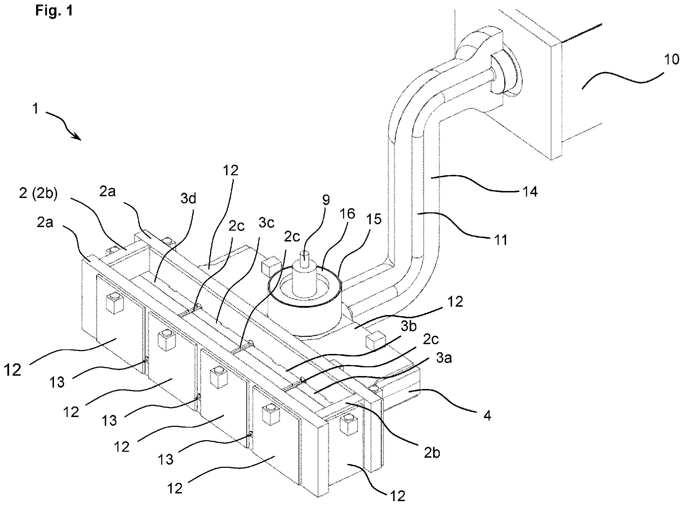

Figur 1 zeigt eine Detaildarstellung eines Spinnbalkens 1 mit einem extern angeordnetem Extruder 10, der feste Kunststoffteile verflüssigt und den verflüssigten Kunststoff über eine Schmelzeleitung 11 einem Verteilblock 4 zugeführt wird. Auf dem Verteilblock 4 ist eine Spinnpumpe 9 angeordnet, die den flüssigen Kunststoff über integrierte Leitungen im Verteilblock 4 in vier Spinnpakete 3a - 3d pumpt. Die Spinnpumpe 9 ist von einem Wärmespeicherrohr 16 mit ummantelten Zylinderheizkörper 15 umgeben. Die Spinnpakete 3a - 3d sind in einem beheizten Düsenrachen 2 angeordnet. Unterhalb der Spinnpakete 3a - 3d oder in den Spinnpaketen 3a - 3d integriert sind nicht dargestellte Spinndüsen, aus denen der flüssige Kunststoff als dünne Filamente abgezogen wird. Der Verteilblock 4 und der Düsenrachen 2 weisen an den Außenseiten Flächenheizelemente 12 auf, die ausgebildet sind, den flüssigen Kunststoff im schmelzförmigen Zustand zu halten. Die Schmelzeleitung 11 wird zusätzlich noch mittels mindestens einer Heizmanschette 14 beheizt, damit der flüssige Kunststoff auf dem Weg zwischen Extruder 10 und Verteilblock 4 nicht einfriert. Jeder Spinnbalken 1 umfasst zumindest einen Düsenrachen 2, in dem mindestens ein Spinnpaket 3a angeordnet ist, sowie einen Verteilblock 4 mit mindestens einer Spinnpumpe 9. Im Vergleich zum Düsenrachen 2, der als länglicher Block mit annähernd gleicher Höhe und Tiefe ausgebildet ist, ist hier der Verteilblock 4 als flächiges Element ausgebildet, der aus einer unteren und mindestens einer oberen Platte 4a, 4b besteht. Der Verteilblock 4 ist mehrteilig ausgebildet, wobei in einem flächigen Element 4a die Zuführ- 5, 5a, 5b und/oder Verteilleitungen 6a-6d zu einer Seite offen eingearbeitet sind. Dies kann beispielsweise mittels spanabhebenden oder erodierenden Fertigungsverfahren erfolgen. Das mindestens zweite flächige Element 4b des Verteilblocks ist ausgebildet, die offenen Leitungen zu verschließen. Dabei können die Zuführ- 5, 5a, 5b und/oder Verteilleitungen 6a-6d in beiden flächigen Elementen korrespondierend zueinander, oder nur in einem flächigen Element (oben oder unten) des Verteilblocks 4 eingearbeitet sein. Der Vorteil liegt in dem einfachen Herstellverfahren, wodurch nicht einzelne Leitungen verlegt, beheizt und isoliert werden müssen. Ein weiterer Vorteil ist die Integration der Spinnpumpe 9 auf oder in den Verteilblock 4, wodurch die Abwärme des Verteilblockes 4 für die Spinnpumpe 9 verwendet werden kann und die zu beheizenden Leitungen kurzgehalten werden.

Eine längsseitige Stirnwand des Verteilblocks 4 ist an dem Düsenrachen 2 angeordnet, wobei sowohl der Verteilblock 4 und der Düsenrachen 2 über gemeinsame Leitungen zur Zuführung der Kunststoffschmelze in die Spinnpakete 3a - 3d verbunden sind. In diesem Ausführungsbeispiel sind am Düsenrachen 2 alle vertikalen flächigen Längs- und Schmalseiten 2b, 2a mit Flächenheizelementen 12 verkleidet. Zumindest die Mittelstege 2c, die die einzelnen Spinnpakete 3a-3d voneinander trennen, weisen elektrisch betätigbare Heizpatronen 13 auf, die ausgebildet sind, innerhalb des Düsenrachens 2 die benötigte Temperatur zu erzeugen. Der Verteilblock 4 weist auf der Ober- und Unterseite jeweils mindestens ein Flächenheizelement 12 auf. Die Flächenheizelemente 12 werden mittels nicht dargestellten Befestigungselementen an den zu beheizenden Flächen klemmend oder hängend befestigt. Die Befestigung ist so ausgebildet, dass die Flächenheizelemente 12 sehr schnell demontiert werden können.

Die Heizmanschette 14 besteht aus einem glasisoliertem Heizleiter, welche passgenau auf die Schmelzeleitung hergestellt wird. Die Heizmanschette kann beispielsweise mit einer Heizleistung von 600 W betrieben werden und die Schmelzeleitung auf 320° C aufheizen. Je nach Ausformung der Zuführleitung können eine oder mehrere Heizmanschettenelemente 14 zum Einsatz kommen.

Die Flächenheizelemente 12 können aus einer Stahl-Messing-Kombination oder aus Keramik bestehen und sind ausgebildet, die Außenflächen des Düsenrachens 2 und des Verteilblockes 4 auf beispielsweise 320° C aufzuheizen. Jedes Flächenheizelement 12 kann beispielsweise mit einer Heizleistung von 300 W betrieben werden. Sie können Langlöcher zum Einhängen in eine Vorrichtung aufweisen und zusätzlich Bohrungen zur Befestigung mittels Schrauben oder anderer Befestigungselemente. Weiterhin sind Bohrungen vorhanden, durch die Heizpatronen oder Thermosensoren in die einzelnen Bauteile des Spinnbalkens eingesetzt werden können.

Die Heizpatronen 13 können aus hochwarmfester Stahllegierung oder aus Keramik bestehen und in den Düsenrachen 2 und in den Verteilblock 4 eingesetzt werden, beispielsweise durch Einschrauben, und sind ausgebildet, die Bauteile bis auf 320° C aufzuheizen. Jede Heizpatrone 13 kann beispielsweise mit einer Heizleistung von 100 W betrieben werden. Die Heizpatronen 13 können mit Thermoelementen zur Überwachung der aktuellen Temperatur kombiniert werden.

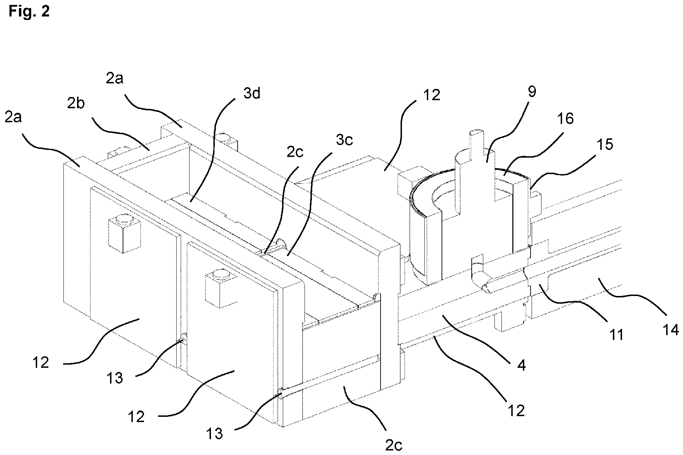

Nach Fig. 2 sind zwischen den Spinnpaketen 3a, 3b; 3b, 3c; 3c, 3d (hier ist nur das Spinnpaket 3c und 3d abgebildet) im Düsenrachen 2 mehrere Mittelstege 2c angeordnet, die ebenfalls mehrere Heizpatronen 13 und/oder ein Flächenheizelement 12 aufweisen können, um eine gleichmäßige Temperatur der Spinnpakete 3a-3d an allen Seiten zu gewährleisten.

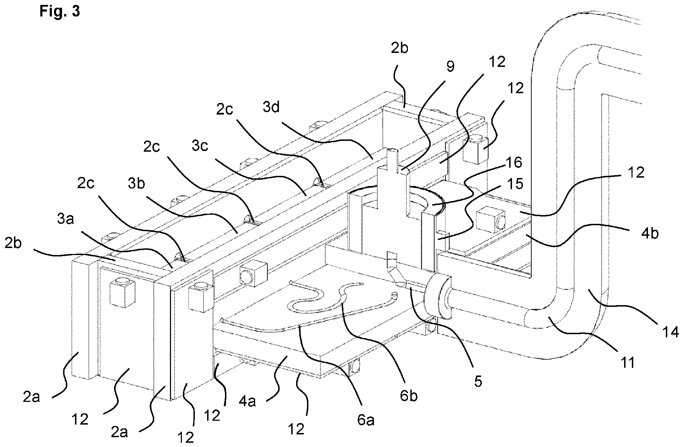

In Figur 3 wird der Verteilblock 4 dargestellt, der im Wesentlichen aus einer oberen und einer unteren Platte 4b, 4a besteht. Von der oberen Platte 4b wurde ein Flächenheizelement 12 entfernt, sowie die obere Platte 4b halb geschnitten dargestellt. Hier sind die Nuten erkennbar, die in die Trennfläche beider Platten 4a, 4b oder nur in eine Platte 4a oder 4b als Leitung eingefräst sind. Von der Schmelzeleitung 11 (Heizmanschette 14 halb geschnitten dargestellt) läuft eine Zuführleitung 5 zur Spinnpumpe 9, die ebenfalls halb geschnitten im unteren Bereich dargestellt ist. Von der Spinnpumpe 9, die auf oder in der oberen Platte 4b des Verteilblocks 4 montiert ist, gehen jeweils vier Verteilleitungen 6a - 6d zum Düsenrachen 2 und anschließend in die Spinnpakete 3a - 3d, wobei der Düsenrachen 2 zugehörige Öffnungen aufweist, von denen die Polymerschmelze über die Verteilleitungen 6a - 6d durch den Düsenrachen 2 in die Spinnpakete 3a - 3d geleitet wird. Damit wird durch den Arbeitsdruck des Extruders 10 der flüssige Kunststoff vom Extruder 10 über die Schmelzeleitung 11 und die Zuführleitung 5 bis zur Spinnpumpe 9 transportiert. Diese transportiert den flüssigen Kunststoff über die Verteilleitungen 6a - 6d zu den einzelnen Spinnpaketen 3a - 3d. Diese Anordnung der Spinnpumpe 9 auf oder in dem Verteilblock 4 ermöglicht eine variable Anordnung der Zuführ- und Verteilleitungen, um mit möglichst wenig Abzweigungen (Splitt) den flüssigen Kunststoff an die Spinnpakete 3a - 3d weiterzuleiten.

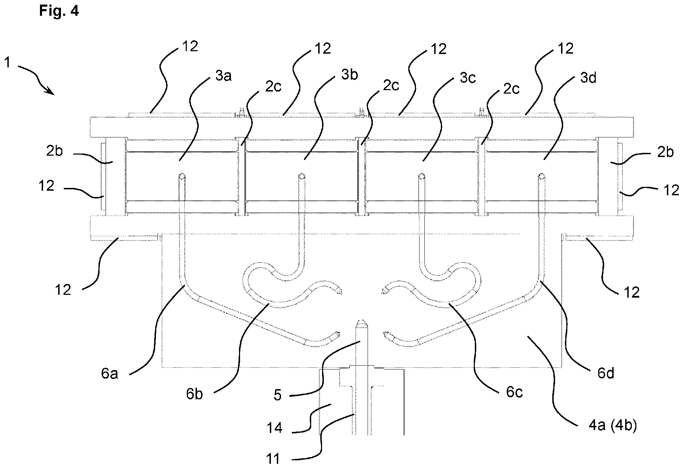

In Figur 4 erfolgt die Darstellung von Figur 3 in Draufsicht ohne die Spinnpumpe 9 und ohne die obere Platte des Verteilbblocks 4b. Hier sind die Zuführleitung 5 und die vier Verteilleitungen 6a - 6d erkennbar, die zu je einem der hier dargestellten Spinnpakete 3a - 3d führen. In der Draufsicht der Figur 4 sind ebenfalls die Flächenheizelemente 12 erkennbar, die den Spinnbalken 1 an den vertikalen Außenflächen umgeben. Zwischen den Spinnpaketen 3a - 3d sind weiterhin die Mittelstege 2c aus Figur 2 zu erkennen, die zwischen den Spinnpaketen 3a, 3b; 3b, 3c; 3c, 3d angeordnet sind und die Heizpatronen 13 aufnehmen können. Je nach Anzahl der Spinnpumpen 9, der Zuführleitungen 5 und der Spinnpakete 3a - 3d ändert sich auch die Anzahl der gefrästen Verteilleitungen 6a - 6d im Verteilblock 4. Dabei kann es die Variante geben, wodurch die Kunststoffschmelze vor, und/oder nach der Spinnpumpe 9 einen sogenannten Hydraulik-Splitt durchläuft, also verzweigt wird. Damit wird der Umstand beschrieben, dass sich die Kunststoffschmelze selbstständig unter dem Druck der Spinnpumpe 9 oder des Extruders 10 durch eine gefräste Verzweigung oder Leitung im Verteilblock 4 aufteilt und so die Spinnpakete 3a - 3d speist.

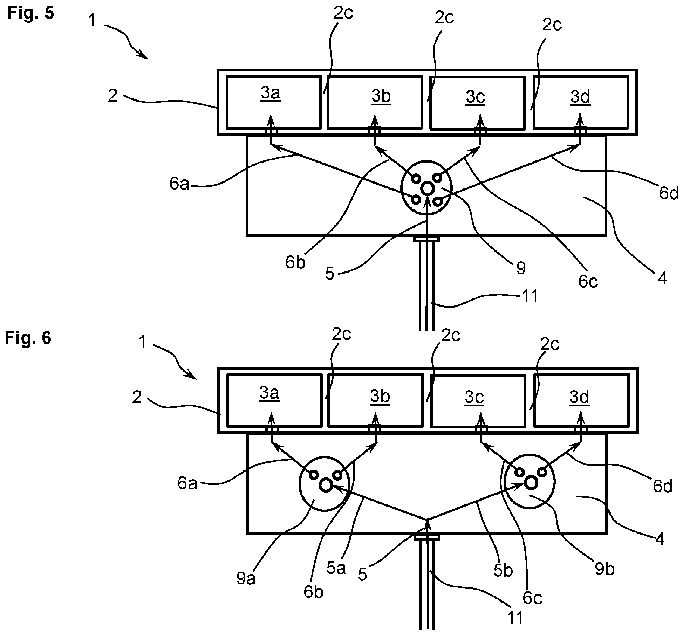

Figur 5 zeigt vereinfacht die Anordnung der Verteilleitungen 6a - 6d, die von der Spinnpumpe 9 zu den Spinnpaketen 3a - 3d verlaufen. Der Spinnbalken 1 weist vier Spinnpakete 3a - 3d auf, die nebeneinander, jeweils durch einen beheizten Mittelsteg 2c voneinander separiert, angeordnet sind. Der Verteilblock 4 weist eine einzige Spinnpumpe 9 auf, über die eine Aufteilung der Polymerschmelze mittels der Verteilleitungen 6a - 6d an die Spinnpakete 3a - 3d stattfindet. Es gibt keine Verzweigung der Zuführ- oder Verteilleitungen 5, 6a - 6d (0 Splitt).

In der Figur 6 weist der Spinnbalken 1 ebenfalls vier Spinnpakete 6a - 6d auf, die nebeneinander, jeweils durch einen beheizten Mittelsteg 2c voneinander separiert angeordnet sind. Der Verteilblock 4 weist zwei Spinnpumpen 9a, 9b auf, über die eine Aufteilung der Polymerschmelze stattfindet. Dabei teilt sich die Zuführleitung 5 innerhalb des Verteilblockes 4 auf zwei Stränge 5a, 5b (1 Split) auf, wobei jeweils ein Strang bzw. Leitung 5a, 5b eine separate Spinnpumpe 9a, 9b versorgt. Demnach sind auf dem Verteilblock 4 zwei Spinnpumpen 9a, 9b angeordnet, die jeweils zwei Spinnpakete 3a, 3b; 3c, 3d mit Polymerschmelze versorgen. Von den Spinnpumpen 9a, 9b werden ohne weitere Verzweigung jeweils zwei Spinnbalken 3a, 3b; 3c, 3d mit jeweils einer separaten Verteilleitung 6a - 6d mit Polymerschmelze versorgt.

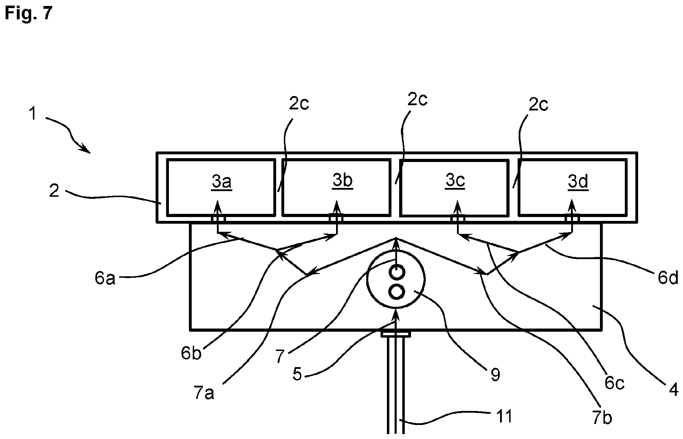

Figur 7 zeigt wiederum einen Spinnbalken 1 mit vier Spinnpaketen 3a - 3d und einer einzigen Spinnpumpe 9 auf dem Verteilblock 4, wobei sich eine Pumpenleitung 7 nach der Spinnpumpe 9 in zwei Pumpenleitungen 7a, 7b aufteilt und mittels jeweils zwei weiterer Verteilleitungen 6a, 6b; 6c, 6d zu je zwei Spinnpaketen 3a, 3b; 3c, 3d verzweigt. Jede Verteilleitung 6a - 6d versorgt wieder jeweils ein Spinnpaket 3a - 3d, so dass bei vier Spinnpaketen 3a - 3d und einer Spinnpumpe 9 die Polymerschmelze über insgesamt drei Abzweigungen (3xSplit) zu den Spinnpaketen geführt wird.

Durch das Heizen der Schmelzeleitung 11 mittels Heizmanschette 14, der variable Einsatz der elektrischen Heizpatronen 13 und das Einkapseln des Düsenrachens 2 und des Verteilblocks 4 mittels Flächenheizelementen 12 entfällt das komplette bisherige Heizmedium und vereinfacht die Konstruktion und Herstellung erheblich. Boiler, doppelwandige Rohre und aufwendige Schweiß- und Prüfverfahren können entfallen. Zudem können ganze Baugruppen des bisherigen Heizsystems und die Vakuumstation entfallen. Die Konstruktion wird kompakter als die bisherige Lösung und eignet sich leichter für eine modulare Erweiterung. Der Transport und die Installation vereinfachen sich. Im Gegensatz zum Stand der Technik, bei dem der Verteilblock 4 nicht beheizt, sondern nur isoliert wird, weist dieser jetzt eigene Flächenheizelemente 12 auf, wodurch der Verteilblock 4 jetzt auch als Wärmespeicher dient. Die Flächenheizelemente 12 können sehr schnell demontiert werden, so dass die Wartung des Spinnbalkens erleichtert wird. Die Integration der Verteilleitungen 6a - 6d in den Verteilblock 4 erleichtert die Herstellung und Montage, und die Beheizung der Verteilleitungen 6a - 6d. Die Anordnung der Spinnpumpe 9 auf oder in den Verteilblock 4 ermöglicht in Abhängigkeit der zu speisenden Spinnpakete eine optimale Aufteilung der Verzweigungen in den Verteilleitungen 6a - 6d des Verteilblockes 4. Die Transportwege für den flüssigen Kunststoff werden kurzgehalten, und die Abwärme des Verteilblockes 4 kann für die Spinnpumpe 9 verwendet werden.

### Bezugszeichen

- 1: Spinnbalken
- 2: Düsenrachen
- 2a: Schmalseite
- 2b: Längsseite
- 2c: Mittelsteg
- 3a-d: Spinnpaket
- 4: Verteilblock
- 4a: untere Platte
- 4b: obere Platte
- 5, 5a, 5b: Zuführleitung
- 6a-d: Verteilleitung
- 7, 7a, 7b: Pumpenleitung
- 9, 9a, 9b: Spinnpumpe
- 10: Extruder
- 11: Schmelzeleitung
- 12: Flächenheizelement
- 13: Heizpatrone
- 14: Heizmanschette
- 15: Zylinderheizkörper
- 16: Wärmespeicherrohr

## Patentansprüche

1. Spinnbalken zur Herstellung von schmelzgesponnenen Filamenten oder Garn, umfassend zumindest einen Düsenrachen (2), in dem mindestens ein Spinnpaket (3a - 3d) angeordnet ist, sowie mindestens einen Verteilblock (4) mit mindestens einer Spinnpumpe (9), wobei über einen extern angeordneten Extruder (10) flüssiger Kunststoff zu der mindestens einen Spinnpumpe (9) gefördert wird, die den flüssigen Kunststoff über den mindestens einen Verteilblock (4) zu dem mindestens einen Spinnpaket (3a - 3d) mit einer Spinndüse fördert, wobei der zumindest eine Düsenrachen (2) und/oder der zumindest eine Verteilblock (4) an zumindest einem Teil der Außenflächen mindestens ein Flächenheizelement (12) aufweist, das ausgebildet ist, zumindest diesen Teil der Außenfläche elektrisch zu beheizen, **dadurch gekennzeichnet, dass** der mindestens eine Verteilblock (4) als ein flächiges Element ausgebildet ist, der aus einer unteren und mindestens einer oberen Platte (4a, 4b) besteht und mit einer längsseitigen Stirnwand an dem Düsenrachen (2) angeordnet ist, und dass der Verteilblock (4) zumindest auf der Ober- und Unterseite mit Flächenheizelementen (12) verkleidet ist.

2. Spinnbalken nach Anspruch 1, **dadurch gekennzeichnet, dass** die elektrische Beheizung zusätzlich mittels Heizpatronen erfolgt.

3. Spinnbalken nach Anspruch 1, **dadurch gekennzeichnet, dass** zumindest die vertikalen Außenflächen des Düsenrachens (2) mit Flächenheizelementen (12) verkleidet sind.

4. Spinnbalken nach Anspruch 1, **dadurch gekennzeichnet, dass** der Düsenrachen (2) zwischen jeweils zwei Spinnpaketen (3a, 3b; 3b, 3c; 3c, 3d) Mittelstege (2c) aufweist, die ausgebildet sind, Heizpatronen (13) aufzunehmen.

5. Spinnbalken nach Anspruch 1, **dadurch gekennzeichnet, dass** die Flächenheizelemente (12) demontierbar am Düsenrachen (2) und/oder am Verteilblock (4) befestigt sind.

6. Spinnbalken nach Anspruch 1, **dadurch gekennzeichnet, dass** der Verteilblock (4) mehrteilig ausgebildet ist, wobei zumindest in einem Teil des Verteilblockes (4a) offene Zuführ- und/oder Verteilleitungen (5, 5a, 5b; 6a-6d) angeordnet sind, die durch einen zweiten Teil des Verteilblockes (4b) verschlossen werden.

7. Spinnbalken nach einem der vorhergehenden Ansprüche, **dadurch gekennzeichnet, dass** die mindestens eine Spinnpumpe (9) auf oder teilweise in dem Verteilblock (4) angeordnet ist.

8. Spinnbalken nach Anspruch 7, **dadurch gekennzeichnet, dass** der Verteilblock (4) ausgebildet ist, den flüssigen Kunststoff vom externen Extruder (10) zur Spinnpumpe (9) zu leiten.

9. Spinnbalken nach einem der vorhergehenden Ansprüche, **dadurch gekennzeichnet, dass** der flüssige Kunststoff im Verteilblock (4) ohne Verzweigung oder mit Verzweigungen zu jedem Spinnpaket (3a-3d) geleitet wird.

10. Spinnbalken nach Anspruch 6, **dadurch gekennzeichnet, dass** der mehrteilige Verteilblock (4a, 4b) mit mindestens zwei oder mehr Befestigungselementen miteinander befestigt und dichtend verspannt ist.

## Claims

1. A spinning beam for producing melt-spun filaments or yarn, comprising at least one nozzle throat (2), in which at least one spinning pack (3a - 3d) is arranged, as well as at least one distribution block (4) with at least one spinning pump (9), wherein liquid plastic is conveyed via an externally arranged extruder (10) to the at least one spinning pump (9), which conveys the liquid plastic via the at least one distribution block (4) to the at least one spinning pack (3a - 3d) with a spinning nozzle, wherein the at least one nozzle throat (2) and/or the at least one distribution block (4) comprises at least one surface heating element (12) on at least a part of the outer surfaces, which is configured to electrically heat at least said part of the outer surface, **characterized in that** the at least one distribution block (4) is configured as a flat element which consists of a lower and at least one upper plate (4a, 4b), and is arranged with a long-side end wall at the nozzle throat (2), and that the distribution block (4) is clad at least on the upper and lower sides with surface heating elements (12).

2. The spinning beam according to claim 1, **characterized in that** the electrical heating is additionally provided by means of heating cartridges.

3. The spinning beam according to claim 1, **characterized in that** at least the vertical outer surfaces of the nozzle throat (2) are clad with surface heating elements (12).

4. The spinning beam according to claim 1, **characterized in that** the nozzle throat (2) has intermediate webs (2c) between each two spinning packs (3a, 3b; 3b, 3c; 3c, 3d), which are configured to receive heating cartridges (13).

5. The spinning beam according to claim 1, **characterized in that** the surface heating elements (12) are removably attached to the nozzle throat (2) and/or to the distribution block (4).

6. The spinning beam according to claim 1, **characterized in that** the distribution block (4) is configured in multiple parts, wherein open feed and/or distribution lines (5, 5a, 5b; 6a-6d) are arranged at least in one part of the distribution block (4a), which are closed by a second part of the distribution block (4b).

7. The spinning beam according to one of the preceding claims, **characterized in that** the at least one spinning pump (9) is arranged on or partially in the distribution block (4).

8. The spinning beam according to claim 7, **characterized in that** the distribution block (4) is configured to guide the liquid plastic from the external extruder (10) to the spinning pump (9).

9. The spinning beam according to one of the preceding claims, **characterized in that** the liquid plastic in the distribution block (4) is passed to each spinning pack (3a-3d) without branching or with branchings.

10. The spinning beam according to claim 6, **characterized in that** the multi-part distribution block (4a, 4b) is fastened together with at least two or more fastening elements and clamped in a sealing manner.

## Revendications

1. Barre de filage destinée à la fabrication de filaments ou de fils filés à l'état fondu, comprenant au moins une gorge de filière (2), dans laquelle est disposé au moins un ensemble de filage (3a - 3d), ainsi qu'au moins un bloc de distribution (4) comprenant au moins une pompe de filage (9), dans laquelle une matière plastique liquide est acheminée, par l'intermédiaire d'une extrudeuse (10) disposée à l'extérieur, vers l'au moins une pompe de filage (9), qui achemine la matière plastique liquide, par l'intermédiaire de l'au moins un bloc de distribution (4), vers l'au moins un ensemble de filage (3a - 3d) comprenant une filière de filage, dans laquelle l'au moins une gorge de filière (2) et/ou l'au moins un bloc de distribution (4) présente, sur au moins une partie des surfaces extérieures, au moins un élément chauffant surfacique (12), qui est conçu pour chauffer électriquement au moins cette partie de la surface extérieure, **caractérisée en ce que** l'au moins un bloc de distribution (4) est réalisé sous la forme d'un élément plat constitué d'une plaque inférieure et d'au moins une plaque supérieure (4a, 4b) et est disposé, par une paroi frontale longitudinale, sur la gorge de filière (2), et **en ce que** le bloc de distribution (4) est revêtu d'éléments chauffants surfaciques (12) au moins sur sa face supérieure et sa face inférieure.

2. Barre de filage selon la revendication 1, **caractérisée en ce que** le chauffage électrique est en outre effectué au moyen de cartouches chauffantes.

3. Barre de filage selon la revendication 1, **caractérisée en ce qu'**au moins les surfaces extérieures verticales de la gorge de filière (2) sont revêtues d'éléments chauffants surfaciques (12).

4. Barre de filage selon la revendication 1, **caractérisée en ce que** la gorge de filière (2) présente, entre chaque paire d'ensembles de filage (3a, 3b ; 3b, 3c ; 3c, 3d), des nervures intermédiaires (2c) conçues pour recevoir des cartouches chauffantes (13).

5. Barre de filage selon la revendication 1, **caractérisée en ce que** les éléments chauffants surfaciques (12) sont fixés de manière démontable à la gorge de filière (2) et/ou au bloc de distribution (4).

6. Barre de filage selon la revendication 1, **caractérisée en ce que** le bloc de distribution (4) est réalisé en plusieurs parties, dans laquelle des conduites d'alimentation et/ou de distribution ouvertes (5, 5a, 5b ; 6a-6d) sont disposées au moins dans une partie du bloc de distribution (4a) et sont fermées par une deuxième partie du bloc de distribution (4b).

7. Barre de filage selon l'une des revendications précédentes, **caractérisée en ce que** l'au moins une pompe de filage (9) est disposée sur le bloc de distribution (4) ou partiellement dans celui-ci.

8. Barre de filage selon la revendication 7, **caractérisée en ce que** le bloc de distribution (4) est conçu pour acheminer la matière plastique liquide de l'extrudeuse externe (10) à la pompe de filage (9).

9. Barre de filage selon l'une des revendications précédentes, **caractérisée en ce que** la matière plastique liquide est acheminée, dans le bloc de distribution (4), sans ramification ou avec des ramifications vers chaque ensemble de filage (3a-3d).

10. Barre de filage selon la revendication 6, **caractérisée en ce que** les parties du bloc de distribution en plusieurs parties (4a, 4b) sont fixées l'une à l'autre et serrées de manière étanche au moyen d'au moins deux éléments de fixation ou plus.
